(19) Europäisches Patentamt
European Patent Office
Office européen des brevets

(11) **EP 1 467 833 B1**

(12) **FASCICULE DE BREVET EUROPEEN**

(45) Date de publication et mention
de la délivrance du brevet:
**14.05.2008 Bulletin 2008/20**

(21) Numéro de dépôt: **02806031.7**

(22) Date de dépôt: **04.12.2002**

(51) Int Cl.:
**B23K 26/12** $^{(2006.01)}$

(86) Numéro de dépôt international:
**PCT/FR2002/004175**

(87) Numéro de publication internationale:
**WO 2003/057398 (17.07.2003 Gazette 2003/29)**

(54) **PROCÉDÉ ET INSTALLATION DE SOUDAGE LASER AVEC MÉLANGE GAZEUX N2/He À TENEURS CONTROLÉES EN FONCTION DE LA PUISSANCE LASER**

"VERFAHREN UND VORRICHTUNG ZUM LASERSCHWEISSEN MIT EINEM N2/HE-GASGEMISCH, WOBEI DER N2/HE-GEHALT GEMÄSS DER LASERENERGIE GESTEUERT WIRD"

METHOD AND INSTALLATION FOR LASER WELDING WITH A N2/HE GAS MIXTURE, THE N2/HE CONTENT BEING CONTROLLED ACCORDING TO THE LASER POWER

(84) Etats contractants désignés:
**AT BE BG CH CY CZ DE DK EE ES FI FR GB GR IE IT LI LU MC NL PT SE SI SK TR**

(30) Priorité: **11.01.2002 FR 0200326**

(43) Date de publication de la demande:
**20.10.2004 Bulletin 2004/43**

(73) Titulaire: **L'AIR LIQUIDE, Société Anonyme pour l'Etude
et l'Exploitation des Procédés Georges Claude
75007 Paris (FR)**

(72) Inventeurs:
• **BRIAND, Françis
75009 Paris (FR)**
• **CHOUF, Karim
93800 Epinay s/Seine (FR)**
• **LEFEBVRE, Philippe
95310 Saint Ouen l'Aumone (FR)**

(74) Mandataire: **Pittis, Olivier
L'Air Liquide S.A.
75, quai d'Orsay
75321 Paris Cedex 07 (FR)**

(56) Documents cités:
EP-A- 0 527 229          WO-A-02/43918
WO-A-97/34730          DE-A- 3 619 513

• **DANZER W ET AL: "LASER IM NEBEL" LASER, VULKAN VERLAG, ESSEN, DE, no. 1, 1987, pages 32-36, XP000889900 ISSN: 0934-7755**

EP 1 467 833 B1

Printed by Jouve, 75001 PARIS (FR)

**Description**

La présente invention concerne un procédé de soudage par faisceau laser selon le préambule de la revendication 1.

Dans l'industrie, il est connu d'utiliser un faisceau laser pour couper ou souder une ou des pièces métalliques. A ce titre, on peut citer les documents suivants : DE-A-2713904, DE-A-4034745, JP-A-01048692, JP-A-56122690, WO 97/34730, JP-A-01005692, DE-A-4123716, JP-A-02030389, US-A-4,871,897, JP-A-02030389, JP-A-62104693, JP-A-01005692, JP-A-01005693 JP-A-01005694, JP-A-02020681, JP-A-02020682, JP-A-02020683, 98/14302 DE-A-3619513 et DE-A-3934920.

Ainsi, le document EP-A-527 229 décrit un procédé selon le préambule de la revendication 1. Il décrit un procédé de soudage laser de plaques d'acier revêtues de zinc utilisant un gaz contenant de l'argon et de l'oxygène. L'oxygène se combine avec le zinc pour former des oxydes et améliorer la qualité du soudage ainsi opéré.

Le soudage par laser est un procédé de soudage très performant car il permet d'obtenir, à des vitesses élevées, des profondeurs de pénétration très importantes si on les compare à d'autres procédés plus traditionnels, tel le soudage plasma, le soudage MIG (Metal Inert Gas) ou le soudage TIG (Tungsten Inert Gas).

Ceci s'explique par les fortes densités de puissances mises en jeu lors de la focalisation, par un ou plusieurs miroirs ou lentilles, du faisceau laser au niveau du plan de jonction des pièces à souder, par exemple des densités de puissance pouvant dépasser $10^6$ W/cm$^2$.

Ces fortes densités de puissance provoquent une forte vaporisation à la surface des pièces qui, en se détendant vers l'extérieur, induit un creusement progressif du bain de soudage et conduit à la formation d'un capillaire de vapeur étroit et profond, appelé *"keyhole"* en anglais (= "trou de serrure") dans l'épaisseur des tôles, c'est-à-dire au niveau du plan de joint.

Ce capillaire permet un dépôt direct de l'énergie du faisceau laser en profondeur dans la tôle et ce, par opposition avec les procédés de soudage plus conventionnels où le dépôt d'énergie est localisé à la surface.

Ce capillaire est constitué d'un mélange de vapeurs métalliques et de plasma de vapeurs métalliques dont la particularité est d'absorber le faisceau laser et donc de piéger l'énergie au sein du capillaire même.

Une des problématiques du soudage laser est la formation d'un plasma de gaz de couverture.

En effet, ce plasma de vapeurs métalliques, en ensemençant en électrons libres le gaz de couverture ou gaz de protection, peut déclencher l'apparition d'un plasma de gaz de couverture qui est préjudiciable à l'opération de soudage.

Le faisceau laser incident peut alors être fortement, voire totalement, absorbé et donc conduire à une réduction importante de la profondeur de pénétration, voire à une perte de couplage entre le faisceau et la matière et donc à une interruption momentanée du processus de soudage.

Le seuil de densité de puissance à partir duquel le plasma apparaît dépend du potentiel d'ionisation du gaz de couverture utilisé et est inversement proportionnel au carré de la longueur d'onde du faisceau laser.

Ainsi, il est très difficile de souder sous argon pur avec un laser de type CO$_2$, tandis que cette opération peut être réalisée avec beaucoup moins de problème avec un laser de type YAG.

En général, en soudage laser CO$_2$, on utilise comme gaz de couverture de l'hélium qui est un gaz à haut potentiel d'ionisation et qui permet de se prémunir de l'apparition du plasma de gaz de couverture et ce, quelle que soit la puissance du faisceau laser mis en oeuvre.

L'hélium a cependant l'inconvénient d'être un gaz onéreux et de nombreux utilisateurs de laser préféraient utiliser d'autres gaz ou mélanges gazeux moins onéreux que l'hélium mais qui permettraient néanmoins de limiter l'apparition du plasma de gaz de couverture et donc d'obtenir des résultats de soudage similaires à ceux obtenus avec l'hélium mais à un coût moindre.

Ainsi, il existe au plan commercial des mélanges gazeux contenant de l'argon et de l'hélium, par exemple le mélange gazeux contenant 30 % en volume d'hélium et le reste étant de l'argon, commercialisé sous l'appellation LASAL™ 2045 par la société L'AIR LIQUIDE™, lesquels permettent d'obtenir sensiblement les mêmes résultats que l'hélium, pour des puissances laser CO$_2$ inférieures à 5kW et pourvu que les densités de puissance engendrées ne soient pas trop importantes, c'est-à-dire environ supérieures à 2000 kW/cm$^2$.

Or, le problème qui se pose avec ce type de mélange Ar/He est que pour des densités de puissance laser plus importantes, il n'est plus adapté car le seuil de création du plasma de gaz de protection est alors dépassé.

Le but de la présente invention est alors de résoudre ce problème en proposant un procédé de soudage par laser amélioré pouvant mettre en oeuvre des laser de puissance dépassant les 15 à 20 kW et ce, sans ou en minimisant la formation d'un plasma dans le gaz de protection, quelle que soit la puissance ou la densité de puissance choisie.

La solution de l'invention est alors un procédé de soudage par faisceau laser mettant en oeuvre un mélange gazeux de protection contenant de l'azote et de l'hélium, dans lequel la proportion d'azote et/ou d'hélium dans ledit mélange gazeux est choisie ou ajustée en fonction de la puissance ou de la densité de puissance dudit faisceau laser.

Selon le cas, le procédé de l'invention peut comprendre l'une ou plusieurs des caractéristiques techniques suivantes :

- la puissance laser est comprise entre 0.5 kW et 30 kW, de préférence entre 5kW et 20 kW.
- le mélange gazeux de protection est constitué d'azote et/ou d'hélium, de préférence le mélange gazeux contient une proportion volumique d'hélium de 30% à 80%, le reste étant de l'azote, et éventuellement des impuretés inévitables.
- le mélange gazeux est réalisé sur site en mélangeant des quantités déterminées d'azote et d'hélium.
- le mélange gazeux est réalisé au moyen d'un système mélangeur de gaz asservi à la puissance laser ou à la densité de puissance mise en oeuvre de manière à mélanger des quantités contrôlées d'azote et d'hélium.
- on augmente la proportion d'hélium dans le mélange gazeux lorsque la puissance laser ou la densité de puissance augmente.
- la proportion volumique d'hélium dans ledit mélange gazeux est comprise :

  • entre 1 et 30 % pour une puissance de faisceau laser comprise entre 0.5 kW et 4 kW,
  • entre 30 et 50 % pour une puissance de faisceau laser comprise entre 4 kW et 8 kW, et/ou
  • entre 50 et 70 % pour une puissance de faisceau laser comprise entre 8 kW et 12 kW.

- la proportion volumique d'hélium dans ledit mélange gazeuse est comprise :

  • entre 1 et 30 % pour une densité de puissance du faisceau laser comprise entre 500 kW/cm$^2$ et 2 000 kW/cm$^2$,
  • entre 30 et 50 % pour une densité de puissance du faisceau laser comprise entre 2 000 kW/cm$^2$ et 4 000 kW/cm$^2$, et/ou
  • entre 50 et 70 % pour une densité de puissance du faisceau laser comprise entre 4000 kW/cm$^2$ et 10 000 kW/cm$^2$.

De préférence, l'hélium et l'azote sont issus d'une source de gaz unique dans laquelle l'hélium et l'azote sont pré-mélangés en proportions désirées au moyen, par exemple, d'un mélangeur de gaz.

L'invention a également trait à une installation de soudage par faisceau laser avec mise en oeuvre d'un mélange gazeux de protection contenant de l'azote et de l'hélium, comprenant :

- au moins une source d'azote,
- au moins une source d'hélium,
- des moyens de mélange de gaz pour permettre de mélanger de l'azote issu de la source d'azote avec de l'hélium issu de la source d'hélium,
- un dispositif générateur laser délivrant un faisceau laser ayant une puissance laser d'au moins 0.5 kW,
- des moyens de réglage coopérant avec lesdits moyens de mélange de gaz de manière à ajuster les proportions d'azote et/ou d'hélium en fonction de la puissance laser délivrée du dispositif laser, de manière à augmenter la proportion d'hélium dans le mélange gazeux lorsque la puissance laser ou la densité de puissance augmente.

En outre, selon le procédé de l'invention, la proportion volumique d'hélium (% He) dans ledit mélange gazeux en fonction de la densité de puissance est telle que :

$$28. \ln(\Phi_P) - 207 \leq \% \, He \leq 32{,}3 \, . \, \ln(\Phi_P) - 207$$

où :

- $\ln(\Phi_P)$ représente le logarithme népérien de la densité de puissance exprimée en kW/cm$^2$, et
- % He : le pourcentage volumique d'hélium dans l'azote du mélange gazeux.

De préférence, la proportion volumique d'hélium (% He) dans ledit mélange gazeux en fonction de la densité de puissance est telle que :

$$28{,}5. \ln(\Phi_P) - 207 \leq \% \, He \leq 31{,}5 \, . \, \ln(\Phi_P) - 207$$

Préférentiellement encore, la proportion volumique d'hélium (% He) dans ledit mélange gazeux en fonction de la densité de puissance est telle que :

$$29 . \ln(\Phi_P) - 207 \leq \%\, He \leq 31 . \ln(\Phi_P) - 207$$

L'invention va maintenant être mieux comprise grâce aux explications données ci-dessous en références à la figure annexée.

Comme expliqué ci-dessus, en soudage par faisceau laser, un problème majeur qui se pose est lié à la création d'un plasma de gaz de couverture néfaste à l'opération de soudage de par l'absorption forte, voire totale, du faisceau laser qu'il engendre, et entraîne alors une réduction notable de la profondeur de pénétration, voire à une perte de couplage entre le faisceau laser et la matière à souder, donc à une interruption du processus de soudage.

Or, les inventeurs de la présente invention ont mis en évidence que le seuil d'apparition du plasma de gaz de couverture était conditionnée, pour une densité de puissance laser type $CO_2$ fixée, par la proportion volumique d'hélium (en fonction de celle d'azote) dans le mélange gazeux d'hélium et d'azote utilisé comme gaz de protection pendant l'opération de soudage et que cette proportion d'hélium devait varier en fonction de la densité de puissance du laser.

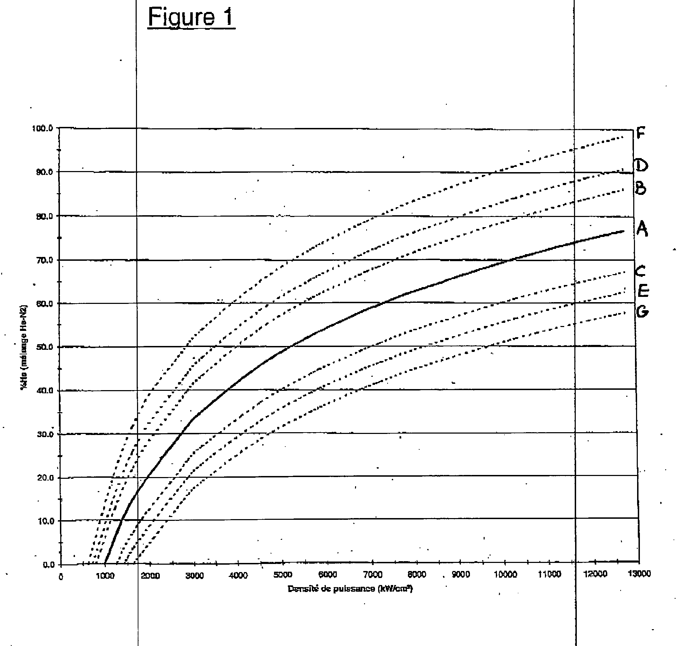

Ainsi, sur la figure 1, on a représenté (courbe A) l'évolution du seuil d'apparition du plasma en fonction de la densité de puissance (en abscisses) et de la proportion volumique d'hélium (en ordonnées) dans le mélange formé d'azote et d'hélium, la somme des teneurs en azote et hélium constituant 100% en vol. du mélange.

La courbe A a été obtenue à partir de l'analyse de la profondeur de pénétration des cordons de soudure réalisées avec différentes teneurs d'hélium dans le mélange, ainsi que par examen visuel de l'apparition ou de la non-apparition du plasma de gaz de protection au cours du processus de soudage

La densité de puissance a été obtenue en divisant la puissance laser sur la pièce par le diamètre de la tâche focale obtenue avec le laser considéré, préalablement mesuré grâce à un analyseur de faisceau laser.

Le domaine situé au dessus de la courbe A représente le domaine où, pour la densité de puissance considérée, la teneur en hélium dans l'azote permet d'effectuer un cordon de soudure sans apparition d'un plasma de gaz de protection.

Dans le domaine situé en dessous de la courbe A, il y a claquage du gaz de protection et donc présence d'un plasma de gaz de protection.

Pour tenir compte des incertitudes liées à la mesure du diamètre (en microns) de la tâche focale, à celle de la teneur en hélium dans le mélange d'azote et d'hélium, et à celle sur la répartition de l'énergie dans la tâche focale, trois faisceaux de courbes (B,C), (D,E) et (F,G) ont été aussi représentés en Figure 1.

Les équations de ces courbes sont du type :

$$\%He = \mu.\ln(\Phi_P) - 207$$

où:

- In $(\Phi_P)$ représente le logarithme népérien de la densité de puissance exprimée en $kW/cm^2$,
- %He : le pourcentage d'hélium dans l'azote, et
- $\mu$ : une valeur qui dépend de la courbe considérée avec : $\mu$=31 pour la courbe B, $\mu$=29 pour la courbe C, $\mu$=31,5 pour la courbe D, $\mu$=28,5 pour la courbe E, $\mu$ = 32,3 pour la courbe F, et $\mu$ = 28 pour la courbe G.

Ainsi, dans la zone du plan comprise entre les courbes F et G (respectivement D et E ou B et C), on peut choisir, pour la densité de puissance considérée, le mélange N2/He qui permet d'obtenir les mêmes performances que de l'hélium pur ou qu'un mélange N2/He situé au dessus de la zone comprise entre les courbes F et G (respectivement D et E ou B et C).

A l'inverse, en dessous de cette zone, il y a toujours claquage dans le gaz de protection et donc apparition d'un plasma de gaz de protection. Le mélange gazeux déterminé à partir de ces courbes est donc le mélange optimum, c'est-à-dire celui qui contient le moins d'hélium et qui donne cependant sensiblement les mêmes résultats que de l'hélium pur ou qu'un mélange avec une proportion d'hélium plus importante.

L'ensemble de ces courbes a été réalisé à une vitesse de soudage de 3 m/mn sur pièces en acier et sur acier inoxydable, avec un miroir parabolique de focale 250 mm, 200 mm ou 150 mm, et en utilisant un laser $CO_2$ dont le facteur de qualité était de 4.

Comme montré sur la Figure 1, un mélange d'hélium et d'azote contenant 50% en volume d'azote donne des profondeurs de pénétration et des vitesses de soudage sensiblement égales à de l'hélium pur pour une densité de

puissance laser $CO_2$ de $5,3.10^6$ W/cm$^2$.

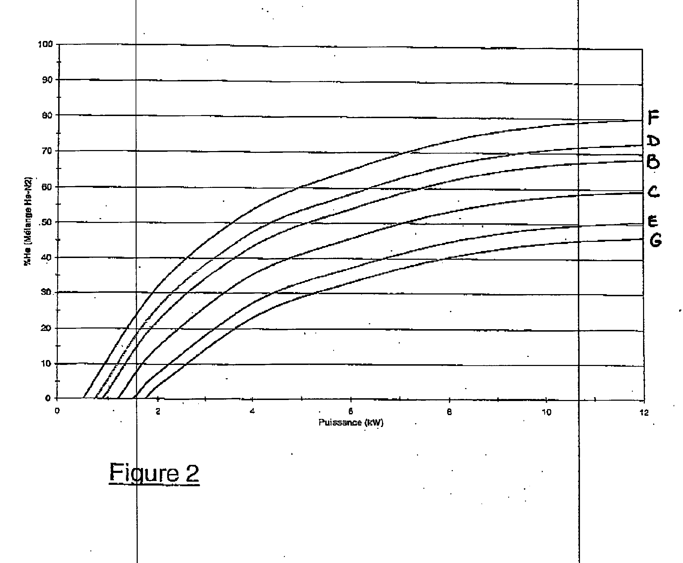

L'invention peut aussi être visualisée par une représentation de l'évolution du seuil d'apparition du plasma de gaz de protection en fonction de la teneur en hélium dans l'azote, et de la puissance du laser mise en oeuvre, comme schématisé en Figure 2.

Cette autre représentation, moins générale que la précédente, peut s'obtenir en partant des courbes de la Figure 1 et en utilisant les relations suivantes :

$$(1) \qquad \Phi_P = P/S$$

où : $\Phi_P$ est la densité de puissance, P est la puissance laser utilisée et S la surface de la tâche focale

$$(2) \qquad S = \pi W_0^2$$

où : $W_0$ est le rayon de la tâche focale

$$(3) \qquad W_0 W_F = M^2(\lambda f / \pi)$$

où : $W_F$ est le rayon du faisceau laser au niveau du miroir ou de la lentille de focalisation à la puissance considérée, $M^2$ est le facteur de qualité du faisceau laser qui est en général une donnée constructeur ($M^2 = 1$ pour un faisceau Gaussien), $\lambda$ est la longueur d'onde du faisceau laser (10,6$\mu$m pour un laser type $CO_2$) et f est la distance focale du miroir ou de la lentille de focalisation.

Ainsi, peut on passer indifféremment d'une représentation en densité de puissance (Figure 1) à une représentation en puissance (Figure 2), et inversement, à l'aide des relations ci-dessus, pour évaluer à partir de la puissance ou de la densité de puissance utilisée, le mélange azote/hélium correspondant.

La figure 2 a été obtenue ici à partir des courbes de la Figure 1 et ce, pour un facteur de qualité de 4, une distance focale de 200 mm et un diamètre de faisceau au niveau du miroir de focalisation de 28 mm.

Ainsi, à 6 kW, avec une focale de 200 mm, pour un laser de facteur de qualité 4 et un diamètre de faisceau au niveau du miroir de focalisation de 200mm, on peut utiliser un mélange azote/hélium contenant 50% en volume de chacun de ces composés.

La présente invention est donc basée sur le fait d'adapter ou d'ajuster le mélange gazeux N2/He en fonction de la puissance du laser ou de la densité de puissance utilisée de manière à obtenir un soudage de qualité et à coûts réduits, sans génération de plasma de gaz de protection ou alors avec une génération de plasma aussi faible que possible.

Selon l'invention, l'ajustage des proportions des composés dans le mélange gazeux peut se faire sur la base des proportions volumiques, molaires ou massiques ; toutefois, un ajustage volumique est préféré car plus simple à mettre en oeuvre.

Partant de là, la mise en oeuvre de l'invention peut se faire par la réalisation d'une gamme de mélanges de gaz en bouteilles, c'est-à-dire sous forme conditionnée, avec une teneur d'hélium dans l'azote variable et adaptée en fonction de la densité de puissance ou de la puissance laser.

Par exemple, dans le tableau ci-après sont donnés trois mélanges N$_2$/He différents adaptés, respectivement, à trois gammes de densité de puissance laser conseillée pour mettre en oeuvre l'invention.

| Composition du mélange gazeux N2/He (exprimée en % vol. de He) | Gammes de densités de puissance laser recommandées |
| --- | --- |
| N2 + 30% He | 500 à 2000 kW/cm$^2$ |
| N2 + 50% He | 2000 à 4000 kW/cm$^2$ |
| N2 + 70% He | 4000 à 10000 kW/cm$^2$ |

Selon le cas, l'invention peut aussi être mise en oeuvre directement sur site par un opérateur, préalablement au début du soudage, par exemple à partir de stockage d'hélium et d'azote, du mélange gazeux N$_2$/He le plus adapté à la densité de puissance ou à la puissance du laser utilisé et ce, suivant les spécifications de la figure ci-annexée.

De façon alternative, le mélange $N_2$/He souhaité peut aussi être obtenu par asservissement automatique d'un mélangeur de gaz en fonction de la densité de puissance ou de la puissance du laser utilisé et en utilisant la courbe de la figure ci-annexée comme courbe d'étalonnage.

Le procédé de soudage laser de l'invention est particulièrement adapté au soudage de pièces en aluminium ou en alliages d'aluminium, en acier inoxydable ou en acier doux.

Le procédé de soudage laser de l'invention peut être utilisé pour souder des pièces d'épaisseurs identiques ou différentes et comprises entre 0,1 mm et 300 mm.

**Revendications**

1. - Procédé de soudage par faisceau laser mettant en oeuvre un mélange gazeux de protection contenant de l'azote et de l'hélium, dans lequel la proportion d'azote et/ou d'hélium dans ledit mélange gazeux est choisie ou ajustée en fonction de la puissance ou de la densité de puissance dudit faisceau laser, caractéristique en ce que la proportion d'hélium dans le mélange gazeux est augmentée lorsque la puissance laser ou la densité de puissance augmente.

2. - Procédé selon la revendication 1, **caractérisé en ce que** la puissance laser est comprise entre 0.5 kW et 30 kW, de préférence entre 5kW et 20 kW.

3. - Procédé selon l'une des revendications 1 ou 2, **caractérisé en ce que** le mélange gazeux de protection est constitué d'azote et d'hélium.

4. - Procédé selon l'une des revendications 1 à 3, **caractérisé en ce que** le mélange gazeux est réalisé sur site en mélangeant des quantités déterminées d'azote et d'hélium.

5. - Procédé selon l'une des revendications 1 à 4, **caractérisé en ce que** le mélange gazeux est réalisé au moyen d'un système mélangeur de gaz asservi à la puissance laser ou à la densité de puissance mise en oeuvre de manière à mélanger des quantités contrôlées d'azote et d'hélium.

6. - Procédé selon l'une des revendications 1 à 5, **caractérisé en ce que** le mélange gazeux contient une proportion volumique d'hélium de 30% à 80%, le reste étant de l'azote, et éventuellement des impuretés inévitables.

7. - Procédé selon la revendication 1, **caractérisé en ce que** proportion volumique d'hélium dans ledit mélange gazeux est comprise:

   - entre 1 et 30 % pour une puissance de faisceau laser comprise entre 0.5 kW et 4 kW,
   - entre 30. et 50 % pour une puissance de faisceau laser comprise entre 4 kW et 8 kW , et/ou
   - entre 50 et 70 % pour une puissance de faisceau laser comprise entre 8 kW et 12 kW.

8. - Procédé selon la revendication 1, **caractérisé en ce que** la proportion volumique d'hélium dans ledit mélange gazeux est comprise :

   entre 1 et 30 % pour une densité de puissance du faisceau laser comprise entre 500 kW/cm$^2$ et 2 000 kW/cm$^2$, - entre 30 et 50 % pour une densité de puissance du faisceau laser comprise entre 2 000 kW/cm$^2$ et 4 000 kW/cm$^2$, et/ou - entre 50 et 70 % pour une densité de puissance du faisceau laser comprise entre 4000 kW/cm$^2$ et 10 000 kW/cm$^2$.

9. - Procédé selon l'une des revendications 1 à 8, **caractérisé en ce que** l'hélium et l'azote sont issus d'une source de gaz unique dans laquelle l'hélium et l'azote sont pré-mélangés en proportions désirées.

10. - Installation de soudage par faisceau laser avec mise en oeuvre d'un mélange gazeux de protection contenant de l'azote et de l'hélium, comprenant :

   - au moins une source d'azote,
   - au moins une source d'hélium,
   - des moyens de mélange de gaz pour permettre de mélanger de l'azote issu de la source d'azote avec de l'hélium issu de la source d'hélium,

- un dispositif générateur laser délivrant un faisceau laser ayant une puissance laser d'au moins 0.5 kW,
- des moyens de réglage coopérant avec lesdits moyens de mélange de gaz de manière à ajuster les proportions d'azote et/ou d'hélium en fonction de la puissance laser délivrée du dispositif laser, de manière à augmenter la proportion d'hélium dans le mélange gazeux lorsque la puissance laser ou la densité de puissance augmente.

**11.** - Procédé selon la revendication 1, **caractérisé en ce que** la proportion volumique d'hélium (% He) dans ledit mélange gazeux en fonction de la densité de puissance est telle que :

$$28. \ln(\Phi_P) - 207 \leq \% \, He \leq 32,3 \, . \, \ln(\Phi_P) - 207$$

où :

- In $(\Phi_P)$ représente le logarithme népérien de la densité de puissance exprimée en $kW/cm^2$, et
- % He : le pourcentage volumique d'hélium dans l'azote du mélange gazeux.

**12.** - Procédé selon la revendication 11, **caractérisé en ce que** la proportion volumique d'hélium (% He) dans ledit mélange gazeux en fonction de la densité de puissance est telle que :

$$28,5. \ln(\Phi_P) - 207 \leq \% \, He \leq 31,5 \, . \, \ln(\Phi_P) - 207$$

**13.** - Procédé selon l'une des revendications 11 ou 12, **caractérisé en ce que** la proportion volumique d'hélium (% He) dans ledit mélange gazeux en fonction de la densité de puissance est telle que :

$$29. \ln(\Phi_P) - 207 \leq \% \, He \leq 31 \, . \, \ln(\Phi_P) - 207$$

**Claims**

**1.** Laser beam welding process employing a shielding gas mixture containing nitrogen and helium, in which the proportion of nitrogen and/or helium in said gas mixture is chosen or adjusted according to the power or power density of said laser beam, **characterized in that** the proportion of helium in the gas mixture is increased when the laser power or power density is increased.

**2.** Process according to Claim 1, **characterized in that** the laser power is between 0.5 kW and 30 kW, preferably between 5 kW and 20 kW.

**3.** Process according to either of Claims 1 and 2, **characterized in that** the shielding gas mixture consists of nitrogen and helium.

**4.** Process according to one of Claims 1 to 3,
**characterized in that** the gas mixture is produced on site, by mixing defined amounts of nitrogen and helium.

**5.** Process according to one of Claims 1 to 4,
**characterized in that** the gas mixture is produced by means of a gas mixer system slaved to the laser power or power density employed so as to mix controlled amounts of nitrogen and helium.

**6.** Process according to one of Claims 1 to 5,
**characterized in that** the gas mixture contains a helium volume proportion of 30% to 80%, the remainder being nitrogen and possibly inevitable impurities.

**7.** Process according to Claim 1, **characterized in that** the volume proportion of helium in said gas mixture is:

- between 1 and 30% for a laser beam power of between 0.5 kW and 4 kW;
- between 30 and 50% for a laser beam power of between 4 kW and 8 kW; and/or
- between 50 and 70% for a laser beam power of between 8 kW and 12 kW.

8. Process according to Claim 1, **characterized in that** the volume proportion of helium in said gas mixture is:

- between 1 and 30% for a laser beam power density of between 500 $kW/cm^2$ and 2000 $kw/cm^2$;
- between 30 and 50% for a laser beam power density of between 2000 $kW/cm^2$ and 4000 $kW/cm^2$; and/or
- between 50 and 70% for a laser beam power density of between 4000 $kW/cm^2$ and 10 000 $kW/cm^2$

9. Process according to one of Claims 1 to 8, **characterized in that** helium and nitrogen come from a single gas source in which the helium and nitrogen are premixed in the desired proportions.

10. Laser beam welding installation employing a shielding gas mixture containing nitrogen and helium, comprising:

- at least one nitrogen source;
- at least one helium source;
- gas mixing means allowing the nitrogen coming from the nitrogen source to be mixed with the helium coming from the helium source;
- a laser generator device delivering a laser beam having a laser power of at least 0.5 kW; and
- regulating means that cooperate with said gas mixing means so as to adjust the proportions of nitrogen and/or helium according to the laser power delivered by the laser device so as to increase the proportion of helium in the gas mixture when the laser power or power density is increased.

11. A process according to Claim 1, **characterized in that** the volume proportion of helium (%He) in said gas mixture as a function of the power density is such that:

$$28xIn(\Phi_P) - 207 \leq \%He \leq 32.3xIn(\Phi_P) - 207$$

in which:

- $In(\Phi_P)$ represents the natural logarithm of the power density expressed in $kW/cm^2$; and
- %He represents the volume percentage of helium in nitrogen of the gas mixture.

12. Process according to Claim 11, **characterized in that** the volume proportion of helium (%He) in said gas mixture as a function of the power density is such that:

$$28.5xIn(\Phi_P) - 207 \leq \%He \leq 31.5xIn(\Phi_P) - 207.$$

13. Process according to either of Claims 11 and 12, **characterized in that** the volume proportion of helium (%He) in said gas mixture as a function of the power density is such that:

$$29xIn(\Phi_P) - 207 \leq \%He \leq 31xIn(\Phi_P) - 207.$$

## Patentansprüche

1. Laserschweißverfahren, bei welchem ein Schutzgasgemisch zum Einsatz kommt, das Stickstoff und Helium enthält, wobei der Stickstoff- und/oder Heliumanteil im Gasgemisch in Abhängigkeit von der Leistung oder der Leistungsdichte des gebündelter Laserstrahls gewählt oder eingestellt wird, **dadurch gekennzeichnet, dass** der Anteil des Heliums in dem Gasgemisch erhöht wird, wenn die Laserleistung oder die Leistungsdichte zunimmt.

**2.** Verfahren nach Anspruch 1, **dadurch gekennzeichnet, dass** die Laserleistung zwischen 0,5 kW und 30 kW, vorzugsweise zwischen 5 kW und 20 kW, liegt.

**3.** Verfahren nach Anspruch 1 oder 2, **dadurch gekennzeichnet, dass** das Schutzgasgemisch aus Stickstoff und Helium besteht.

**4.** Verfahren nach einem der Ansprüche 1 bis 3,
**dadurch gekennzeichnet, dass** das Gasgemisch vor Ort durch Mischen bestimmter Mengen an Stickstoff und Helium hergestellt wird.

**5.** Verfahren nach einem der Ansprüche 1 bis 4,
**dadurch gekennzeichnet, dass** das Gasgemisch mittels eines Gasmischsystems hergestellt wird, welches in Abhängigkeit von der eingesetzten Laserleistung oder Leistungsdichte derart gesteuert wird, dass kontrollierte Mengen an Stickstoff und Helium vermischt werden.

**6.** Verfahren nach einem der Ansprüche 1 bis 5,
**dadurch gekennzeichnet, dass** das Gasgemisch einen Volumenanteil an Helium von 30% bis 80% enthält, wobei Stickstoff und möglicherweise unvermeidliche Verunreinigungen den Rest ausmachen.

**7.** Verfahren nach Anspruch 1, **dadurch gekennzeichnet, dass** der Volumenanteil an Helium in dem Gasgemisch

- zwischen 1 und 30% liegt, wenn die Leistung des Laserstrahls von 0,5 kW bis 4 kW beträgt,
- zwischen 30 und 50% liegt, wenn die Leistung des Laserstrahls von 4 kW bis 8 kW beträgt, und/oder
- zwischen 50 und 70% liegt, wenn die Leistung des Laserstrahls von 8 kW bis 12 kW beträgt.

**8.** Verfahren nach Anspruch 1, **dadurch gekennzeichnet, dass** der Volumenanteil an Helium in dem Gasgemisch

- zwischen 1 und 30% liegt, wenn die Leistungsdichte des Laserstrahls von 500 kW/cm$^2$ bis 2.000 kW/cm$^2$ beträgt,
- zwischen 30 und 50% liegt, wenn die Leistungsdichte des Laserstrahls von 2.000 kW/cm$^2$ bis 4.000 kW/cm$^2$ beträgt, und/oder
- zwischen 50 und 70% liegt, wenn die Leistungsdichte des Laserstrahls von 4.000 kW/cm$^2$ bis 10.000 kW/cm$^2$ beträgt.

**9.** Verfahren nach einem der Ansprüche 1 bis 8,
**dadurch gekennzeichnet, dass** das Helium und der Stickstoff aus einer einzigen Gasquelle stammen, in welcher das Helium und der Stickstoff in den gewünschten Anteilen vorgemischt sind.

**10.** Anlage zum Laserschweißen, bei welcher ein Schutzgasgemisch zum Einsatz kommt, das Stickstoff und Helium enthält, wobei die Anlage Folgendes umfasst:

- mindestens eine Stickstoffquelle,
- mindestens eine Heliumquelle,
- Gasmischmittel, welche es ermöglichen, den Stickstoff aus der Stickstoffquelle mit dem Helium aus der Heliumquelle zu vermischen,
- eine Lasererzeugungsvorrichtung, die einen Laserstrahl mit einer Laserleistung von mindestens 0,5 kw abgibt,
- Einstellungsmittel, die mit den Gasmischmitteln derart zusammenwirken, dass die Anteile an Stickstoff und/ oder Helium in Abhängigkeit von der Laserleistung, welche von der Laservorrichtung abgegeben wird, derart eingestellt werden, dass der Anteil an Helium in dem Gas erhöht wird, wenn die Laserleistung oder die Leistungsdichte zunimmt.

**11.** Verfahren nach Anspruch 1, **dadurch gekennzeichnet, dass** der Volumenanteil an Helium (% He) in dem Gasgemisch in Abhängigkeit von der Leistungsdichte derart ist, dass Folgendes gilt:

$$28. \ln(\Phi_p) - 207 \leq \% \text{ He} \leq 32,3 \cdot \ln(\Phi_p) - 207$$

wobei:

- $\ln(\Phi_p)$ für den natürlichen Logarithmus der Leistungsdichte, ausgedrückt in kW/cm$^2$, steht und
- % He der Volumenanteil an Helium im Stickstoff des Gasgemischs ist.

**12.** Verfahren nach Anspruch 11, **dadurch gekennzeichnet, dass** der Volumenanteil an Helium (% He) in dem Gasgemisch in Abhängigkeit von der Leistungsdichte derart ist, dass Folgendes gilt:

$$28,5 . \text{In}(\Phi_p)-207 \leq \% \text{ He} \leq 31,5 . \text{In}(\Phi p)-207$$

**13.** Verfahren nach Anspruch 11 oder 12, **dadurch gekennzeichnet, dass** der Volumenanteil an Helium (% He) in dem Gasgemisch in Abhängigkeit von der Leistungsdichte derart ist, dass Folgendes gilt:

$$29 . \text{In}(\Phi p)-207 \leq \% \text{ He} \leq 31 . \text{In}(\Phi p)-207$$

## Figure 1

Figure 2

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 2713904 A
- DE 4034745 A
- JP 01048692 A
- JP 56122690 A
- WO 9734730 A
- JP 01005692 A
- DE 4123716 A
- JP 02030389 A
- US 4871897 A
- JP 62104693 A

- JP 01005693 A
- JP 01005694 A
- JP 02020681 A
- JP 02020682 A
- JP 02020683 A
- JP 10014302 A
- DE 3619513 A
- DE 3934920 A
- EP 527229 A